Europäisches Patentamt

European Patent Office

Office européen des brevets

(11) Veröffentlichungsnummer: **0 163 968**
A2

# (12) EUROPÄISCHE PATENTANMELDUNG

(21) Anmeldenummer: 85105566.5

(22) Anmeldetag: 07.05.85

(51) Int. Cl.⁴: **F 17 C 13/12,** F 16 K 17/38

(30) Priorität: 10.05.84 DE 3417269

(43) Veröffentlichungstag der Anmeldung: 11.12.85
Patentblatt 85/50

(84) Benannte Vertragsstaaten: **BE FR GB NL SE**

(71) Anmelder: LGA Gastechnik GmbH, Bonner Strasse 10,
D-5480 Remagen 6 (DE)

(72) Erfinder: Die Erfinder haben auf ihre Nennung verzichtet

(54) Sicherheitseinrichtung für Flüssiggastanks.

(57) Die Sicherheitseinrichtung weist ein auf erhöhte Temperaturen, wie sie bei Brand auftreten, ansprechendes temperaturgesteuertes Organ (31) auf. Das Organ (31) enthält ein Ventil (35), welches durch Federn (49, 50) in die Schließstellung vorgespannt ist. Auf das Ventil (35) wirkt über einen Stößel (42) der Temperaturfühler (48), dessen Membran (43) bei Temperaturerhöhung über den Stößel (42) das Ventil (35) öffnet. Dadurch wird die Einlaßleitung (32) an die drucklose Auslaßleitung (33) angeschlossen und das pilotgesteuerte Überdruckventil, das den Tank abschließt, wird geöffnet. Wenn die Temperatur am Temperaturfühler (48) wieder absinkt, schließt das Ventil (35) selbsttätig wieder.

0163968

## Sicherheitseinrichtung für Flüssiggastanks

Die Erfindung betrifft eine Sicherheitseinrichtung für Flüssiggastanks, mit einem den Tank abschließenden pilotgesteuerten Überdruckventil, welches eine über eine Drossel mit dem Tankdruck verbundene Steuerleitung aufweist, und mit mindestens einem temperaturgesteuerten Organ, welches zwischen Steuerleitung und Tankauslaß geschaltet ist und im Brandfall die Steuerleitung drucklos macht.

Es ist bekannt, Flüssiggastanks auf Tankschiffen mit einem Überdruckventil auszustatten, welches im Falle einer Druckerhöhung anspricht und Gas in die Umgebung abläßt (DE-OS 27 31 804, DE-OS 28 40 191). Eine Erhöhung des Drucks im Tank tritt insbesondere dann ein, wenn die Temperatur des Flüssiggases sich erhöht. Besonders gefährlich ist es, wenn diese Temperaturerhöhung plötzlich erfolgt, wie dies z.B. bei einem Brand der Fall ist. Um im Brandfall dafür zu sorgen, daß rechtzeitig Gas aus dem Tank abgelassen wird, ist es bekannt, eine Entlastungseinrichtung vorzusehen, die Schmelzsicherungen oder andere temperaturempfindliche Organe, z.B. mit einem Temperaturfühler gesteuerte Magnetventile, enthält, die in der Umgebung des Tanks installiert sind und bei einer Temperaturerhöhung, wie sie im Brandfall eintritt, die Steuerleitung des Pilotventils öffnen, wodurch das Sicherheitsventil des Tanks geöffnet wird und der Tankinhalt in die Umgebung abströmt. Sofern als temperaturgesteuerte Organe Schmelzsicherungen benutzt werden, die ein bei Temperatureinwirkung schmelzendes Lot enthalten, das im festen Zustand die betreffende Leitung abdichtend versperrt, haben die genannten Organe den Nachteil, daß ihre Auslösung irreversibel ist. Dies bedeutet, daß bei einem Ansprechen des Organes der gesamte Inhalt des Tanks abgelassen wird, selbst wenn das Feuer zwischenzeitlich gelöscht worden ist und die Temperatur wieder gesunken ist. Zwar ist in Reihe mit der Schmelzsicherung ein von Hand betätigbares Ventil vorgesehen, das normalerweise offen ist und von Hand geschlossen werden kann, wenn die Schmelzsicherung angesprochen hat, jedoch hat die Praxis gezeigt, daß derartige Ventile im Brandfall bei Nachlassen der Gefahr für den Tank tatsächlich nicht geschlossen werden, weil sie häufig an schwer zugänglicher Stelle angeordnet sind oder das Schließen einfach vergessen wird. Außerdem besteht die Gefahr, daß infolge der Zerstörungen, die bei einem Brand auftreten, das Ventil funktionsunfähig geworden ist. Die anderen im Stand der Technik vorgeschlagenen Temperaturfühler in Form gesteuerter Magnetventile o.dgl. haben den Nachteil, daß sie Fremdenergie benötigen. Derartige Ventile mögen im Brandfall zwar ansprechen, jedoch ist ihre Funktion im Falle der Zerstörung oder Beschädigung ungewiß.

Der Erfindung liegt die Aufgabe zugrunde, eine Sicherheitseinrichtung der eingangs genannten Art zu schaffen, die das Tankventil wieder schließt, wenn die Temperatur sich nach einer erfolgten thermischen Auslösung wieder verringert und die zuverlässig und mit hoher Funktionssicherheit arbeitet.

Zur Lösung dieser Aufgabe ist erfindungsgemäß vorgesehen, daß das temperaturgesteuerte Organ ein von einem rückstellfähigen Temperaturfühler gesteuertes Ventil ist, das bei Abkühlung wieder den Schließzustand einnimmt.

Gemäß einer bevorzugten Ausführungsform der Erfindung weist der Temperaturfühler einen durch eine bewegbare Wand abgeschlossenen Fluidraum auf und die bewegbare Wand wirkt über einen Stößel auf das in Richtung auf seine Schließstellung federgespannte Ventil ein. Bei einer Temperaturerhöhung dehnt sich das in dem Fluidraum befindliche Gas aus, wodurch der Stößel vorgeschoben wird und das Ventil entgegen der Federkraft öffnet. Zieht sich das Gas anschließend wieder zusammen, bewegt sich das Ventil in seine Schließlage zurück, wodurch der Flüssiggastank wieder verschlossen wird.

Eine besondere Gefahr besteht darin, daß der Temperaturfühler bei einem Brand zerstört oder beschädigt wird. In diesem Fall sollte sichergestellt sein, daß das Ventil offen ist, so daß das Gas aus dem Flüssiggastank entweichen kann, um Explosionen zu verhindern. Zweckmäßigerweise sind der Temperaturfühler und das Ventil derart miteinander gekoppelt, daß das Ventil bei zerstörtem Temperaturfühler offen ist. Eine solche Funktion kann dadurch erreicht werden, daß an dem Temperaturfühler eine in die Schließstellung des Ventils wirkende erste Feder angeordnet ist, daß das Ventil eine in die Öffnungsstellung wirkende zweite Feder aufweist und daß die Kraft der ersten Feder diejenige der zweiten Feder übersteigt. Normalerweise und bei üblicher Temperatur hält die stärkere erste Feder das Ventil geschlossen, während die zweite Feder bestrebt ist, das Ventil zu öffnen. Im Brandfall übersteigt der im Gasraum herrschende erhöhte Gasdruck zusammen mit der Kraft der zweiten Feder die Schließkraft der ersten Feder und das Ventil öffnet. Wird der Temperaturfühler beschädigt oder zerstört, dann wird der Gasraum undicht und die erste Feder kann ihre Funktion nicht mehr ausüben. Nun ist nur noch die zweite Feder wirksam, die entfernt von dem Temperaturfühler angeordnet ist, und das Ventil öffnet. Auf diese Weise ist sichergestellt, daß im Falle der Zerstörung des Temperaturfühlers der gesamte Inhalt des Flüssiggastanks in die Umgebung abgelassen wird, wenn nicht die Steuerleitung des Pilotventils durch einen manuellen Eingriff abgesperrt wird.

Gemäß einer bevorzugten Ausführungsform der Erfindung ist das Ventil von einem thermisch isolierenden feuerfesten Körper umgeben, aus dem der Temperaturfühler herausragt. Hierdurch wird das Ventil geschützt, während der Temperaturfühler dem Einfluß der Umgebungstemperatur ausgesetzt ist.

Im folgenden werden unter Bezugnahme auf die Zeichnungen Ausführungsbeispiele der Erfindung näher erläutert.

Es zeigen:

Fig. 1 eine schematische Darstellung der gesamten Sicherheitseinrichtung,

Fig. 2 einen Längsschnitt durch eine erste Ausfüh-

ringsform des temperaturgesteuerten Organs und

Fig. 3 einen Längsschnitt durch eine zweite Ausführungsform des temperaturgesteuerten Organs.

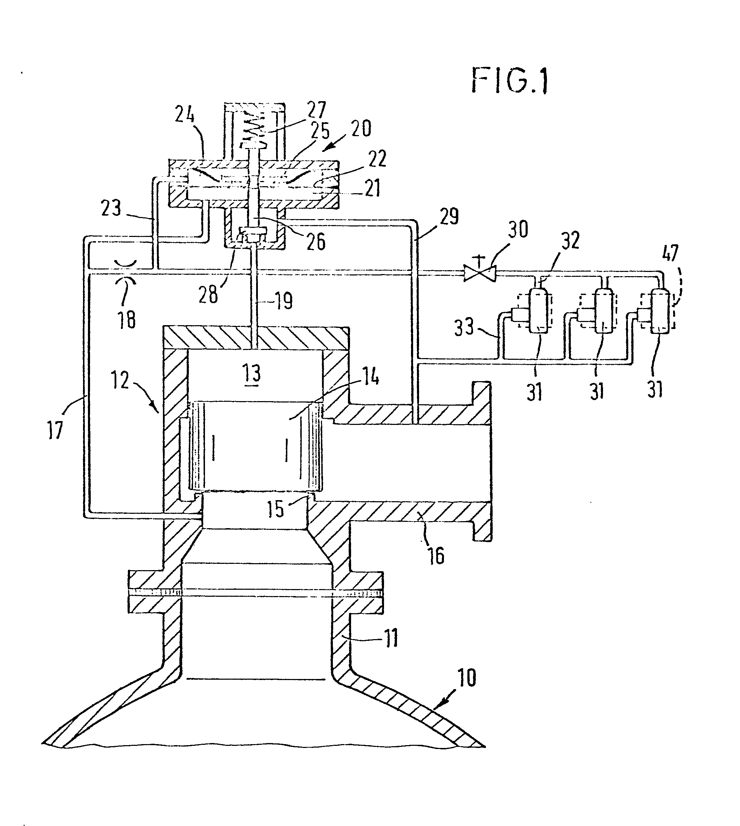

Gemäß Figur 1 ist ein Flüssiggastank 10, der z.B. auf einem Schiff installiert ist, am oberen Ende mit einem Anschlußstutzen 11 versehen, auf dem das Auslaßventil 12 montiert ist. Das Auslaßventil 12 enthält einen vertikalen Zylinderraum 13, in dem der Kolben 14 verschiebbar angeordnet ist. In der dargestellten Ruhestellung liegt die untere Stirnwand des Kolbens 14 an einem ringförmigen Sitz 15 an, um den Tank 10 zu verschließen. Hebt der Kolben 14 von dem Sitz 15 ab, dann gibt er den Weg vom Tank in den Tankauslaß 16 frei.

Von dem Raum unterhalb des Kolbens 14 führt eine Druckleitung 17 über eine Drossel 18 zu einer Leitung 19, die in den Raum oberhalb des Kolbens 14 hineinführt. Im stationären Zustand herrschen daher oberhalb und unterhalb des Kolbens 14 gleiche Drücke. Da die obere wirksame Kolbenfläche größer ist als die untere wirksame Kolbenfläche, wird der Kolben 14 gegen den Sitz 15 gedrückt, so daß der Tankauslaß 16 durch den Kolben 14 verschlossen ist.

Die Druckleitung 17 führt außerdem in die Druckkammer 21 des Pilotventils 20. Die Druckkammer 21 ist von der Membran 22 begrenzt. Auf die der Druckkammer abgewandten Seite der Membran 22 wirkt der Druck in der Leitung 19, welche über Leitung 23 an die ringförmige Kammer 24 angeschlossen ist. Die Kammer 24 umschließt eine starre Platte 25, welche fest an der Membran 22 anliegt und zusammen mit dieser Membran an dem Stößel 26 befestigt ist. Eine Feder 27 treibt ein Ventilelement 28 gegen einen Ventilsitz, um die Verbindung zwischen der Steu- erleitung 19 und einer zu dem Tankauslaß 16 führenden Leitung 29 zu unterbrechen.

Die Sicherheitseinrichtung, soweit sie bisher beschrieben wurde, arbeitet wie folgt: Normalerweise sind die Drücke in den Kammern 21 und 24 zu beiden Seiten der Membran gleich. Die Kraft des Drucks in der Kammer 21 ist jedoch größer, weil diese Kammer auf einen größeren Querschnitt der Membran 22 einwirkt als der Druck in der Kammer 24. Die Kammer 27, die den Druck in der Kammer 24 unterstützt und gegen den Druck in der Kammer 21 arbeitet, bewirkt, daß das Ventilelement 28 in die Schließstellung gedrückt wird. Erhöht sich der Druck im Tank 10, dann ist die Feder 27 nicht mehr in der Lage, das Ventilelement 28 in der Schließstellung zu halten. Das Ventilelement wird vielmehr entgegen der Wirkung der Feder 27 von der Membran 22 bewegt und von seinem Sitz abgehoben. Dadurch strömt Gas aus Leitung 17 über die Drossel 18, das geöffnete Ventil 28 und Leitung 29 zum drucklosen Tankauslaß 16. Weil nunmehr an der Drossel 18 ein Druckabfall auftritt, entsteht eine Druckdifferenz zwischen den Kammern 21 und 24, so daß die Membran 22 das Ventil 28 noch weiter öffnet.

Der bisher beschriebene Aufbau des Pilotventils 20 und seine Funktion sind bekannt. Bekannt ist es auch, an die Steuerleitung 19 über ein von Hand betätigbares Ventil 30 mehrere temperaturgesteuerte Organe 31 anzuschließen, welche mit der zum Tankauslaß 16 führenden drucklosen Leitung 29 verbunden sind und im Brandfall die Steuerleitung 19 mit der drucklosen Leitung 29 verbinden.

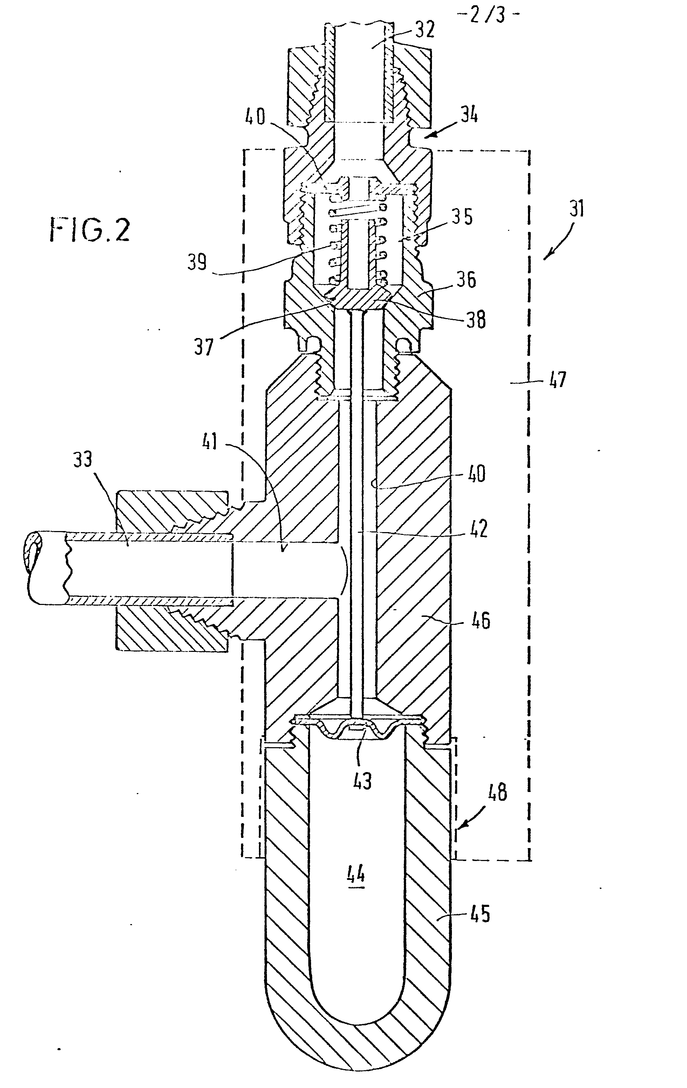

In Fig. 2 ist der Aufbau des erfindungsgemäßen temperaturgesteuerten Ventils 31 dargestellt. Die Einlaßleitung 32, die über das Ventil 30 zur Steuerleitung 19 führt, ist über eine Rohrkupplung 34 an ein federgespanntes Ventil 35 angeschlossen. Das Ventil 35 enthält in einem Gehäuse 36 einen Ventilsitz 37, gegen den der Ventilkörper 38 von einer Feder 39 gedrückt wird. Die Feder 39 stützt sich an einem stromaufwärts angeordneten Armstein 40 ab, der von dem Gas umströmt werden kann. In Strömungsrichtung hinter dem Ventil 35 befindet sich ein geradliniger Kanal 40, von dem eine Abzweigung 41 zu der Auslaßleitung 33 führt, welche mit der drucklosen Leitung 29 verbunden ist. Durch den Kanal 40 erstreckt sich ein geradliniger Stößel 42 in Form einer Stange. Das eine Ende des Stößels 42 ist mit dem Ventilkörper 38 verbunden und das entgegengesetzte Ende ist mit einer Membran 43 verbunden, welche den Fluidraum 44 abschließt. Der Fluidraum 44 enthält ein Fluid (Gas oder Flüssigkeit), das sich bei Wärme ausdehnt und die Membran 43 nach außen bewegt. Bei Abkühlung zieht sich das Fluid wieder zusammen, um den ursprünglichen Zustand einzunehmen. Der Fluidraum 44 ist von einer starren Wand 45 umschlossen, die an einer Stelle eine durch die Membran 43 abgeschlossene Öffnung aufweist. Die Wand 45 bildet ein Gehäuse, das an den den Kanal 40 enthaltenden Block 46 angeschraubt ist. Dieser Block ist zusammen mit dem Gehäuse 35 in einen Körper 47 aus feuerfestem wärmeisolierendem Material, z.B. Keramik, eingebettet, so daß alle funktionswesentlichen Teile des Ventils 35, einschließlich des Stößels 42, gegen Wärmeeinwirkung und Zerstörung geschützt sind. Aus dem Körper 47 ragt lediglich der aus dem Fluidraum 44 und der Wand 45 bestehende Temperaturfühler 48 heraus, der auf die Umgebungstemperatur reagieren soll.

Bei normaler (niedriger) Temperatur drückt die Feder 39 den Ventilkörper 38 gegen den Sitz 37. Das Ventil 35 ist geschlossen. Steigt die Temperatur, dann dehnt sich das Fluid im Fluidraum 44 aus, wodurch über die Membran 43 der Stößel 42 den Ventilkörper 38 entgegen der Wirkung der Feder 39 zurückschiebt und das Ventil 35 öffnet. Nun kann von der Einlaßleitung 32 über das Ventil 35 und den Kanal 40 Gas in die drucklose Auslaßleitung 33 strömen. Dadurch wird die Steuerleitung 19 drucklos und der Kolben 14 des Ventils 12 (Fig. 1) wird geöffnet bzw. offengehalten, da der Raum 13 drucklos wird. Wird das Feuer anschließend gelöscht, und kühlt sich der Temperaturfühler 48 wieder ab, dann zieht sich die Membran 43 wieder zurück und die Feder 39 drückt den Ventilkörper 38 wieder in die Schließstellung. Da nun die Verbindung zwischen der Steuerleitung 19 und der drucklosen Leitung 29 unterbrochen ist, kann sich im Raum 13 wieder der volle Druck aufbauen, wodurch der Kolben 14 schließt.

Die Einlaßleitung 32 und die Auslaßleitung 33 gemäß Figur 2 können miteinander vertauscht werden, ohne daß die Funktion der Sicherheitseinrichtung leidet.

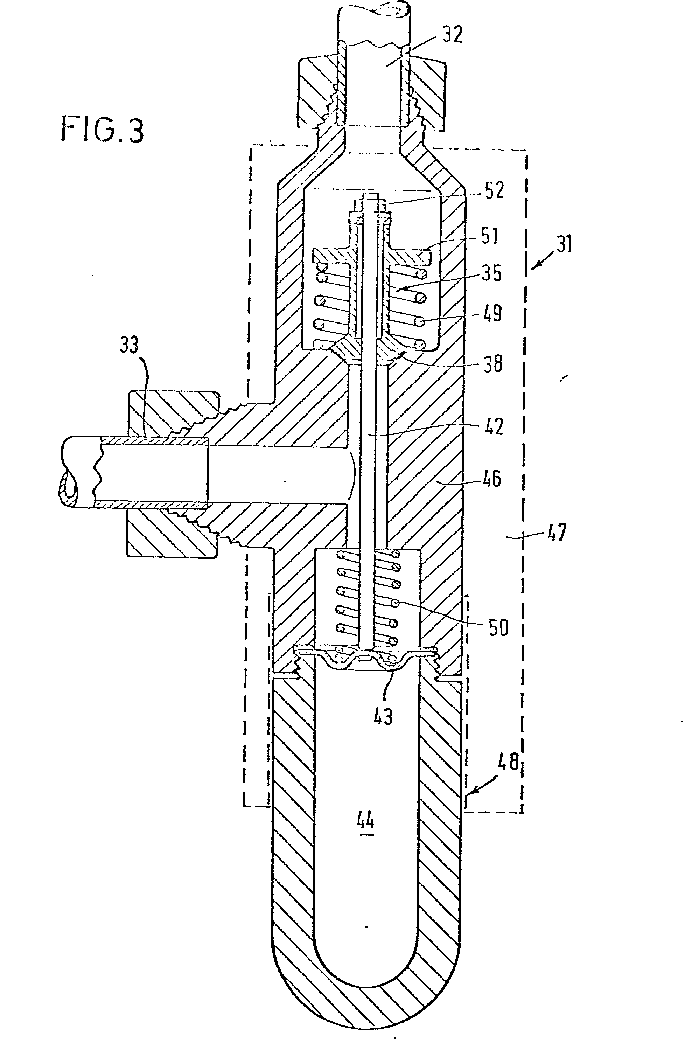

Das in Fig. 2 dargestellte Ventil schließt infolge der Feder 39 selbsttätig, wenn der Temperaturfühler 48 z.B. infolge Wärme- oder Brandeinwirkung zerstört wird. Dagegen hat das temperaturgesteuerte Organ, das in Fig. 3 dargestellt ist, den Vorteil, daß das Ventil 35 öffnet, wenn der Temperaturfühler 48 zerstört ist. Der Ventilkörper 38 wird von der zweiten Feder 49, die an einem Flansch 51 des Ventilkörpers angreift, in die Öffnungsstellung gedrückt, wodurch auch der Stößel 42, der mit dem Ventilkörper 38 über eine Mutter 52 gekoppelt ist, mitgenommen wird. Auf das entgegengesetzte Ende des Stößels 42 bzw. auf die Membran 43 wirkt die erste Feder 50 ein, die - ebenso wie die zweite Feder 49 - an dem Block 46 abgestützt ist. Beide Federn 49 und 50 sind bestrebt, den Stößel 42 in entgegengesetzte Richtungen zu treiben, jedoch ist die Kraft der ersten Feder 50 größer als diejenige der zweiten Feder 49. Aus diesem Grunde wird bei Normaltemperatur, wenn der Druck im Fluidraum 44 die Membran 43 nicht nach außen treibt, das Ventil 35 geschlossen. Bei hohen Temperaturen überwiegt die Druckkraft in der Fluidkammer 44 zusammen mit der Kraft der zweiten Feder 49 die Kraft der ersten Feder 50, so daß das Ventil geöffnet wird. Wird dagegen der Temperaturfühler 48 beschädigt oder zerstört, dann stützt sich die Feder 50 nicht mehr an der Membran 43 ab, so daß diese Feder nicht mehr auf den Stößel 42 und auf das Ventil 35 einwirkt. Das Ventil 35 wird daher durch die zweite Feder 49, die innerhalb des Körpers 47 geschützt angeordnet ist, geöffnet, so daß der gesamte Tank 10 entleert wird, wenn nicht das Ventil 30 von Hand geschlossen wird.

Ein besonderer Vorteil der beschriebenen Ausführungen des temperaturgesteuerten Organs 31 besteht darin, daß dieses Organ ohne Fremdenergie und ohne Hilfsenergie auskommt und ohne Wartung langfristig betriebsbereit ist.

ANSPRÜCHE

1. Sicherheitseinrichtung für Flüssiggastanks, mit einem den Tank (10) abschließenden pilotgesteuerten Überdruckventil, welches über eine Drossel (18) mit dem Tankdruck verbundene Steuerleitung (19) aufweist, und mit mindestens einem temperaturgesteuerten Organ (31), welches zwischen Steuerleitung (19) und Tankauslaß (16) geschaltet ist und im Brandfall die Steuerleitung (19) drucklos macht,
d a d u r c h   g e k e n n z e i c h n e t,   daß das temperaturgesteuerte Organ (31) ein von einem rückstellfähigen Temperaturfühler (48) gesteuertes Ventil (35) ist, das bei Abkühlung wieder den Schließzustand einnimmt.

2. Sicherheitseinrichtung nach Anspruch 1,
d a d u r c h   g e k e n n z e i c h n e t,   daß der Temperaturfühler (48) einen durch eine bewegbare Wand (43) abgeschlossenen Fluidraum (44) aufweist und daß die bewegbare Wand über einen Stößel (42) auf das in Richtung auf seine Schließstellung federgespannte Ventil (35) einwirkt.

3. Sicherheitseinrichtung nach Anspruch 2,
d a d u r c h   g e k e n n z e i c h n e t,   daß der Temperaturfühler (48) und das Ventil (35) derart miteinander gekoppelt sind, daß das Ventil (35) bei zerstörtem Temperaturfühler (48) offen ist.

4. Sicherheitseinrichtung nach Anspruch 3,
d a d u r c h   g e k e n n z e i c h n e t,   daß an dem Temperaturfühler (48) eine in die Schließstellung des Ventils (35) wirkende erste Feder (50) angeordnet ist, daß das Ventil (35) eine in die Schließstellung wirkende zweite Feder (49) aufweist und daß die Kraft der ersten Feder (50) diejenige der zweiten Feder (49) übersteigt.

5. Sicherheitseinrichtung nach einem der Ansprüche 1 bis 4,
d a d u r c h   g e k e n n z e i c h n e t ,   daß das Ventil (35) von einem thermisch isolierenden feuerfesten Körper (47) umgeben ist, aus dem der Temperaturfühler (48) herausragt.

FIG.1

FIG.2

0163968

-2/3-

0163968

FIG.3